# EUROPEAN PATENT SPECIFICATION

(11) **EP 3 772 862 B1**
(45) Date of publication and mention of the grant of the patent: **26.01.2022**
(21) Application number: 20164874.8
(22) Date of filing: 23.03.2020
(51) Int. Cl.: H04W 4/44

(54) **VEHICLE INFORMATION INTERACTING METHOD, DEVICE, APPARATUS AND STORAGE MEDIUM**
FAHRZEUGINFORMATIONSINTERAKTIONSVERFAHREN, VORRICHTUNG, EINRICHTUNG UND SPEICHERMEDIUM
PROCÉDÉ D'INTERACTION D'INFORMATIONS DE VÉHICULE, DISPOSITIF, APPAREIL ET SUPPORT D'ENREGISTREMENT

(30) Priority: 05.08.2019 CN 201910716366
(43) Date of publication of application: 10.02.2021
(73) Proprietor: BEIJING BAIDU NETCOM SCIENCE TECHNOLOGY CO., LTD., No.10 Shangdi 10th Street Haidian District Beijing 100085 (CN)
(72) Inventor: LIU, Siyang, Haidian District, Beijing 100085 (CN); HU, Xing, Haidian District, Beijing 100085 (CN); CHEN, Shangyi, Haidian District, Beijing 100085 (CN)
(74) Representative: J A Kemp LLP

(56) References cited:
- WO-A1-2017/030887
- CN-A- 106 292 432
- CN-A- 109 672 628
- JP-A- 2016 128 997

## Description

### TECHNICAL FIELD

Embodiments of the present invention relate to the field of computer technology, and more particularly, to a vehicle information interacting method, a device, an apparatus and a storage medium in the field of intelligent transportation.

### BACKGROUND

With the continuous development of the field of intelligent driving, in a future transportation environment, there will inevitably be many vehicles with different autonomous driving levels, for example, driverless automation level L0, or partial driving automation level, including driving assistance L1, advanced driving assistance L2, conditional autonomous driving L3 and regional autonomous driving L4, or full autonomous driving level L5, vehicles of multiple autonomous driving levels jointly drive on the road, which will bring great challenge to transportation management and transportation safety.

However, at present, it is not yet possible to effectively monitor multiple vehicles of different autonomous driving levels that jointly drive on the road and autonomous driving status of these vehicles, which reduces the safety of the transportation environment and reduces the traffic efficiency of the overall transportation.

JP2016128997A discloses an on-vehicle device that enables a plurality of vehicles to travel in a convoy traveling mode or a normal traveling mode, where the convoy traveling mode allows the plurality of vehicles to travel in a row while maintaining the inter-vehicle distance.

CN106292432A discloses a transmitting-side electronic equipment on a vehicle, where the electronic equipment acquires and data related to states of an vehicle and forwards the data to other facilities for analysis.

### SUMMARY

The embodiments of the present application provide a vehicle information interacting method, a device, an apparatus, and a storage medium, which are used to solve the problems of poor safety of the transportation environment and low traffic efficiency in the above solution. The present application is set out in the appended set of claims

The invention is defined by the independent claims. Further embodiments of the invention are defined by the dependent claims.

### BRIEF DESCRIPTION OF DRAWINGS

The drawings are used to better understand this solution, and do not constitute a limitation on the present application. Where:
FIG. 1 is a schematic diagram of a scenario of a transportation communication interaction;
FIG. 2 is a schematic flowchart of a first embodiment of a vehicle information interacting method according to an embodiment of the present application;
FIG. 3 is a schematic flowchart of a second embodiment of a vehicle information interacting method according to an embodiment of the present application;
FIG. 4 is a schematic flowchart of a third embodiment of a vehicle information interacting method according to an embodiment of the present application;
FIG. 5 is a schematic flowchart of a fourth embodiment of a vehicle information interacting method according to an embodiment of the present application;
FIG. 6 is a schematic flowchart of a fifth embodiment of a vehicle information interacting method according to an embodiment of the present application;
FIG. 7 is a schematic flowchart of a sixth embodiment of a vehicle information interacting method according to an embodiment of the present application;
FIG. 8 is a schematic architectural diagram of an RSM according to an embodiment of the present application;
FIG. 9 is a schematic structural diagram of a first embodiment of a vehicle information interacting device according to an embodiment of the present application;
FIG. 10 is a schematic structural diagram of a second embodiment of a vehicle information interacting device according to an embodiment of the present application;
FIG. 11 is a schematic structural diagram of a third embodiment of a vehicle information interacting device according to an embodiment of the present application;
FIG. 12 is a block diagram of an in-vehicle interaction apparatus of a vehicle information interacting method according to an embodiment of the present application; and
FIG. 13 is a block diagram of a roadside apparatus of a vehicle information interacting method according to an embodiment of the present application.

### DESCRIPTION OF EMBODIMENTS

Exemplary embodiments of the present application will be illustrated in combination with the accompanying drawings in the following, which include various details of the embodiments of the present application to facilitate understanding, and they should be considered as merely exemplary. Therefore, those of ordinary skill in the art should recognize that various changes and modifications can be made to the embodiments described herein without departing from the scope of the present application. Also, for clarity and conciseness, description of well-known functions and structures are omitted in the following description.

Firstly, explaining the autonomous driving level involved in the present invention is performed:
the autonomous driving technology classification standard proposed by the Society of Automotive Engineers (SAE) is a classification standard that is universally acknowledged by the current global automotive industry, which classifies vehicles into six autonomous driving levels, including: a driverless automation level L0, a driving assistance level L1, an advanced driving assistance level L2, a conditional autonomous driving level L3, a regional autonomous driving level L4, and a full autonomous driving level L5, among which L1 to L4 are partial driving automation level.

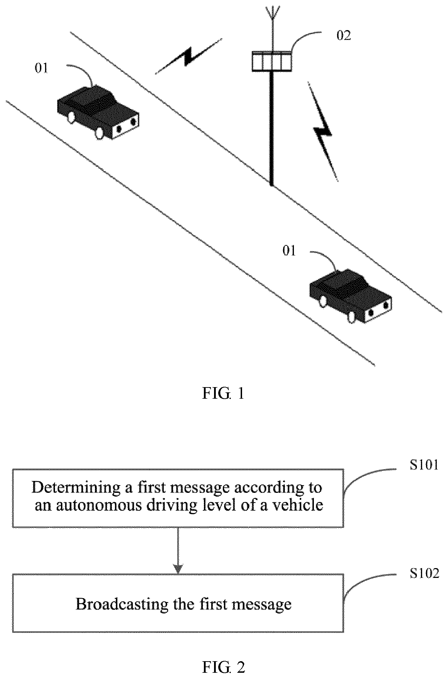

The vehicle information interacting method provided by the present invention can be applied to the schematic diagram of a scenario of a transportation communication interaction shown in FIG. 1. Referring to FIG. 1, the execution body of this solution includes an in-vehicle interaction apparatus 01 and a roadside apparatus 02. The number of the in-vehicle interaction apparatus 01 and the roadside apparatus 02 may be multiple. The in-vehicle interaction apparatus 01 and the roadside apparatus 02, or the in-vehicle interaction apparatus 01 and the in-vehicle interaction device 01 communicate with each other through a vehicleto-anything, or vehicle to X (V2X) technology for performing information transmission. Where, the in-vehicle interaction apparatus 01 is generally applied to an intelligent vehicle equipped with an intelligent driving system. The intelligent driving system includes, but is not limited to, a lane keeping system, a cruise control system, and an adaptive cruise system and the like, or may be applied to a driverless vehicle.

FIG. 2 is a schematic flowchart of a first embodiment of a vehicle information interacting method according to an embodiment of the present application. The execution body in this embodiment is an in-vehicle interaction apparatus. As shown in FIG. 2, the vehicle information interacting method, specifically includes the following steps:
S101: determining a first message according to an autonomous driving level of a vehicle.

Among others, the first message carries information indicating the autonomous driving level of the vehicle and information indicating an autonomous driving status of the vehicle.

Generally speaking, the autonomous driving level of the vehicle is inherent information of the vehicle itself and does not change with the use situations of the vehicle. Each vehicle has a corresponding autonomous driving level.

In the process of determining the first message according to the autonomous driving level of the vehicle, the following three manners can be adopted: manner one, the first message can be determined according to the autonomous driving level of the vehicle and the autonomous driving status corresponding to the autonomous driving level, for example, if the autonomous driving level of the vehicle is a driverless automation level L0, the corresponding autonomous driving status is an off status, and for another example, if the autonomous driving level of the vehicle is a full autonomous driving level L5, the corresponding autonomous driving status is an on status; or manner two, the autonomous driving status of the vehicle can be detected according to the autonomous driving level of the vehicle, and the first message can be further determined, for example, the autonomous driving level of the vehicle is a driving assistance level L1 or an advanced driving assistance level L2 or a conditional autonomous driving level L3 or a regional autonomous driving level L4, a current driving status of the vehicle is detected to determine that the current driving status of the vehicle is an on status, an off status, or an unavailable status; or manner three, a vehicle with at least one of the levels of L1 to L4 and a vehicle with L0 driverless automation level in a transportation environment exist simultaneously, or a vehicle with at least one of the levels of L1 to L4 and a vehicle with L5 full autonomous driving level exist simultaneously, the first message is determined through a method by combining the manner one and the manner two described above.

In an embodiment, the first message is a basic safety message (BSM) of the vehicle. Specifically, the BSM includes a basic safety message body and multiple corresponding data frames, and each data frame includes multiple data elements and/or other data frames, the information indicating the autonomous driving level of the vehicle and the information indicating the autonomous driving status of the vehicle carried by the first message can be set in the basic safety message body or set in the data frames included in the BSM. For example, the information of the autonomous driving level is set in a VehicleClassification data frame, the information of the autonomous driving status is set in the basic safety message body, or the information of the autonomous driving level is set in the basic safety message body, the information of the autonomous driving status is set in the VehicleClassification data frame, or the information of the autonomous driving level is set in a VehicleSafetyExtension data frame, the information of the autonomous driving status is set in a VehicleEventFlags data frame, or the information of the autonomous driving level and the information of the autonomous driving status is combined into one data frame and which is set in the basic safety message body, and the like, which is not limited in the present solution.

It should be understood that in addition to the information of the autonomous driving level and the autonomous driving status, the first message may also include: vehicle type information, such as trucks, lorries, motorcycles, buses, rescue vehicles, etc., and fuel type information, such as gasoline, ethanol, diesel, electricity, hydrogen, propane, mixed fuel, etc., a vehicle special event status, a vehicle historical trajectory, a route prediction, a body light status, and the like.

S102: broadcasting the first message.

Broadcasting the first message enables other in-vehicle interaction apparatus or roadside apparatus within a communication range to receive the first message, and acquire the autonomous driving level and the autonomous driving status of the vehicle through the first message, realizing an interaction of vehicle information.

In a specific implementation, broadcasting the first message, includes: broadcasting the first message through a vehicle to X (V2X) according to a preset period, so that the other in-vehicle interaction apparatus or the roadside apparatus within a V2X communication range of the vehicle can receive the first message.

It should be understood that after the vehicle is stopped or a V2X function is turned off, sending the first message is stopped.

The vehicle information interacting method provided by an embodiment of the present application, determining a first message according to an autonomous driving level of a vehicle, the first message carries information indicating the autonomous driving level of the vehicle and information indicating an autonomous driving status of the vehicle, and broadcasting the first message, so that other in-vehicle interaction apparatus or roadside apparatus within a communication range of the vehicle receive the first message. The autonomous driving level and the autonomous driving status of the vehicle are acquired by receiving the first message, realizing the sharing of information between vehicles and the monitoring of vehicle information by the roadside apparatus, and improving the safety of transportation environment and the traffic efficiency.

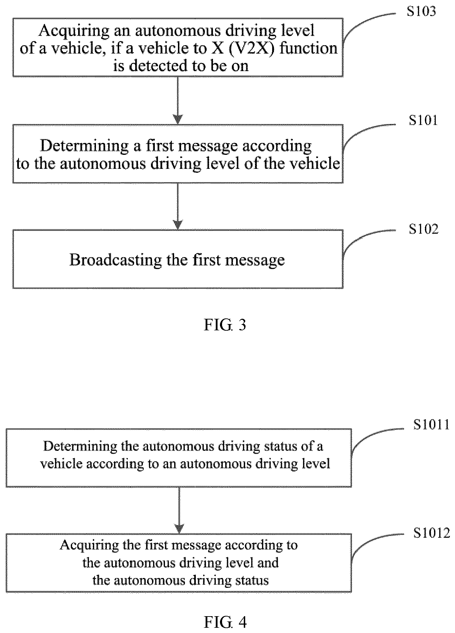

Based on the embodiment shown in FIG. 2, FIG. 3 is a schematic flowchart of a second embodiment of a vehicle information interacting method according to an embodiment of the present application. As shown in FIG. 3, the vehicle information interacting method further includes the following steps:
S103: acquiring an autonomous driving level of a vehicle, if a vehicle to X (V2X) function is detected to be on.

In the present application, if it is detected that the V2X function is turned on, it indicates that information interactions between the in-vehicle apparatus and between the in-vehicle apparatus and the roadside apparatus are started at this time. Therefore, it is necessary to first acquire the autonomous driving level of the vehicle.

Those skilled in the art can understand that a vehicle with a V2X function can turn on the V2X function in at least the following two ways: 1, the V2X function is turned on according to a preset condition, for example, it is set that the V2X function is turned on at the same time as the vehicle starts, or, it is set that the V2X function is turned on within a preset period of time, or it is set that the V2X function is turned on within a preset road section; 2, the V2X function is turned on according to an operation instruction, for example the V2X function is turned on according to an operation instruction input by a user, or, the V2X function is turned on according to operation instructions sent by other devices.

As can be seen from the above embodiments, the autonomous driving level of the vehicle is inherent information of the vehicle itself and does not change with the use situations of the vehicle. Each vehicle has a corresponding autonomous driving level. Therefore, in some embodiments, the in-vehicle interaction apparatus can extract the autonomous driving level in basic attribute information of the vehicle.

In this embodiment, after detecting that the V2X function is turned on, that is, the autonomous driving level of the vehicle is acquired. The autonomous driving level of the vehicle is automatically acquired, so that the in-vehicle interaction apparatus can obtain the first message for interaction according to the autonomous driving level, avoiding the situation that the information of the autonomous driving level and the information of the autonomous driving status of the vehicle are missing from the first message due to the failure to acquire the autonomous driving level of the vehicle in time, which enhances the automation degree of the in-vehicle interaction apparatus is enhanced, and improves the convenience and reliability of the products.

Based on the embodiments shown in FIG. 2 and FIG. 3 above, FIG. 4 is a schematic flowchart of a third embodiment of a vehicle information interacting method according to an embodiment of the present application. As shown in FIG. 4, determining a first message according to an autonomous driving level of a vehicle in step S101 includes the following steps:
S1011: determining an autonomous driving status of a vehicle according to an autonomous driving level.

The autonomous driving status include: an on status, an off status, and an unavailable status.

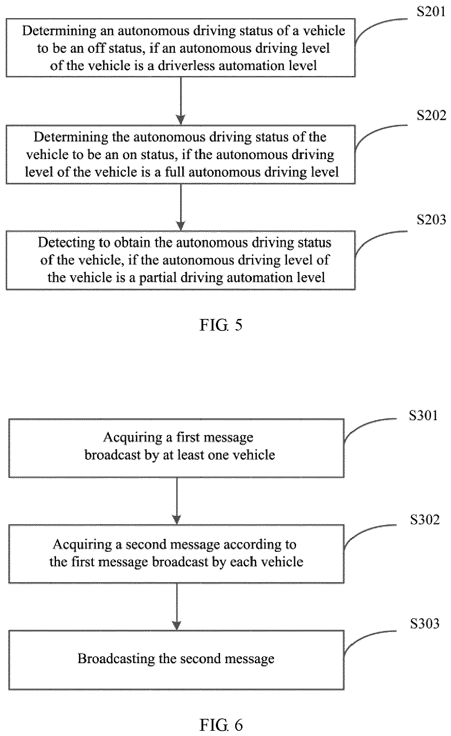

In a specific implementation, FIG. 5 is a schematic flowchart of a fourth embodiment of a vehicle information interacting method according to an embodiment of the present application. As shown in FIG. 5, the step 1011 includes:
S201: determining an autonomous driving status of a vehicle to be an off status, if an autonomous driving level of the vehicle is a driverless automation level.
S202: determining the autonomous driving status of the vehicle to be an on status, if the autonomous driving level of the vehicle is a full autonomous driving level.
S203: detecting to obtain the autonomous driving status of the vehicle, if the autonomous driving level of the vehicle is a partial driving automation level.

Among others, the partial driving automation level includes: a driving assistance level, an advanced driving assistance level, a conditional autonomous driving level, and a regional autonomous driving level; the autonomous driving status includes: an on status, an off status, and an unavailable status.

In the step S201 and step S202, the corresponding autonomous driving status can be directly acquired according to the autonomous driving level of the vehicle. For example, if the autonomous driving level of the vehicle is the driverless automation level L0, the corresponding autonomous driving status is an off status, for another example, if the autonomous driving level of the vehicle is the full autonomous driving level L5, the corresponding autonomous driving status is an on status, and as shown in step S203, if the autonomous driving level of the vehicle is the partial driving automation level, the autonomous driving status of the vehicle is detected to be obtained. For example, if the autonomous driving level of the vehicle is the driving assistance level L1 or the advanced driving assistance level L2 or the conditional autonomous driving level L3 or the regional autonomous driving level L4, a current autonomous driving status of the vehicle is detected to determine that the current driving status of the vehicle is an on status, an off status, or an unavailable status.

In some embodiments, based on the embodiment shown in FIG. 5 above, the detecting to obtain the autonomous driving status of the vehicle in step S203 specifically includes: determining the autonomous driving status of the vehicle to be an on status, if it is detected that the vehicle is in an autonomous driving mode; determining the autonomous driving status of the vehicle to be an off status if it is detected that the vehicle is not in an autonomous driving mode; determining the autonomous driving status of the vehicle to be an unavailable status if it is detected that the vehicle is faulty or there is a detection failure. For vehicles with partial driving automation levels (L1 to L4), the autonomous driving status of the vehicle can be determined by detecting the current driving mode of the vehicle. For example, the current driving mode of the vehicle can be learned by detecting running data and/or parameters of the vehicle, that is, the autonomous driving status of the vehicle can be determined to be an on status or an off status; in a possible scenario, if the vehicle is faulty, it will result in an inaccuracy of an detection result, or the detection process inevitably has the possibility of multiple detection failures, thus when it is detected that the vehicle is faulty or there is a detection failure, it is determined that the autonomous driving status of the vehicle is an unavailable status. In an embodiment, detecting the current driving mode of the vehicle may be an active detection or a passive detection. The active detection is that the in-vehicle interaction apparatus detects a vehicle system or module to obtain the current driving mode, and the passive detection is that the vehicle system or module periodically reports the current driving mode to the in-vehicle apparatus.

Since the autonomous driving status of the vehicle with partial driving automation levels L1 to L4 can be changed, the in-vehicle apparatus needs to detect the vehicle system or module according to a preset period to obtain a real-time autonomous driving status.

It should be understood that after the vehicle is stopped or the V2X function is turned off, detecting of the autonomous driving status is stopped.

S1012: acquiring the first message according to the autonomous driving level and the autonomous driving status.

The first message is obtained by performing setting of the data elements for the basic safety message body and/or the corresponding data frames. Therefore, after acquiring the autonomous driving level and the autonomous driving status of the vehicle, setting of the data elements for the basic safety message body and/or the corresponding data frames is performed to obtain the first message according to the autonomous driving level and the autonomous driving status.

In an embodiment, the first message is a basic safety message (BSM).

In a specific implementation, this step includes: setting an autonomous driving level data element in the BSM according to the autonomous driving level, for example, if the autonomous driving level of the vehicle acquired according to the step S1011 is L0, then the autonomous driving level data element is set to L0; and an autonomous driving status data element in the BSM is set according to the autonomous driving status, for example, if the autonomous driving status of the vehicle acquired according to the step S1011 is an off status, the autonomous driving status data element in the BSM is set to "closed" or "off", to obtain the first message.

It should be understood that both the autonomous driving level data element and the autonomous driving status data element are defined in the BSM in advance. Specifically, they can be both defined in the basic safety message body, or both can be defined in any one or two data frames corresponding to the basic safety message body, or can be defined in the basic safety message body and any data frame corresponding to the basic safety message body, respectively, or the autonomous driving level data element and the autonomous driving status data element constitute one data frame and which is defined in the basic safety message body. In the future development process, other message bodies or data frames may also be introduced, thus it does not exclude the possibility of introducing the autonomous driving level data element and the autonomous driving status data element into other message bodies or data frames, which is not limited in the present solution.

The present application takes that the autonomous driving level data element is defined in a VehicleClassification data frame and the autonomous driving status data element is defined in the basic safety message body as an example to illustrate.

The VehicleClassification data frame is a data frame corresponding to the basic safety message body. This data frame defines a basic type and a fuel power type of the vehicle in the prior art. The basic types of the vehicle include: light trucks, lorries, motorcycles, buses, rescue vehicles, and the like; the fuel power types include: gasoline, ethanol, diesel, electricity, hydrogen, propane, mixed fuel, and the like. Through Abstract Syntax Notation One (ASN.1), it can be expressed as:

```
      VehicleClassification :: = SEQUENCE {
          classification BasicVehicleClass,
          fuelType FuelType OPTIONAL,
   ... }
```

The autonomous driving level data element AutoType is defined in the VehicleClassification data frame, then ASN.1 can be expressed as:

```
      VehicleClassification :: = SEQUENCE {
          classification Basic VehicleClass,
          fuelType FuelType OPTIONAL,
              autoType AutoType
       ... }
```

DE_AutoType is defined as follows:
AutoType :: = INTEGER (0..5)
L0 AutoType :: = 0
L1 AutoType :: = 1
L2 AutoType :: = 2
L3 AutoType :: = 3
L4 AutoType :: = 4
L5 AutoType :: = 5

The basic safety message body defined in the prior art can be expressed by ASN.1 as:

```
   BasicSafetyMessage :: = SEQUENCE {
          msgCnt MsgCount,
          id OCTET STRING (SIZE (8)),
          -- vehicle ID
          plateNo OCTET STRING (SIZE (4..16)) OPTIONAL,
          -- Reserved for Electronic Vehicle Identification
          secMark DSecond,
          timeConfidence TimeConfidence OPTIONAL,
          pos Position3D,
          posAccuracy PositionalAccuracy OPTIONAL,
          -- Accuracy for GNSS system
          posConfidence PositionConfidenceSet OPTIONAL,
          Realtime position confidence
          transmission TransmissionState,
          speed Speed,
          heading Heading,
          angle SteeringWheelAngle OPTIONAL,
          motionCfd MotionConfidenceSet OPTIONAL,
          accelSet AccelerationSet4Way,
          brakes BrakeSystemState,
          size VehicleSize,
          vehicleClass VehicleClassification,
          -- VehicleClassification includes BasicVehicleClass and other extendible type
          safetyExt VehicleSafetyExtensions OPTIONAL,
          emergencyExt VehicleEmergencyExtensions OPTIONAL,
       ... }
```

The autonomous driving status data element AutoStatus is set in the basic safety message body, which can be expressed by ASN.1 as:

```
      BasicSafetyMessage :: = SEQUENCE {
          msgCnt MsgCount,
          id OCTET STRING (SIZE (8)),
          -- vehicle ID
          plateNo OCTET STRING (SIZE (4..16)) OPTIONAL,
          -- Reserved for Electronic Vehicle Identification
          secMark DSecond,
          timeConfidence TimeConfidence OPTIONAL,
          pos Position3D,
          posAccuracy PositionalAccuracy OPTIONAL,
          -- Accuracy for GNSS system
          posConfidence PositionConfidenceSet OPTIONAL,
          -- Realtime position confidence
          transmission TransmissionState,
          speed Speed,
          heading Heading,
          angle SteeringWheelAngle OPTIONAL,
          motionCfd MotionConfidenceSet OPTIONAL,
          accelSet AccelerationSet4Way,
          brakes BrakeSystemStatus,
          size VehicleSize,
          vehicleClass VehicleClassification,
          -- VehicleClassification includes BasicVehicleClass and other extendible type
          safetyExt VehicleSafetyExtensions OPTIONAL,
          emergencyExt VehicleEmergencyExtensions OPTIONAL,
              auto Status Auto Status
       ... }
```

DE_AutoStatus is defined as follows:

```
      AutoStatus :: = ENUMERATED {
          unavailable (0), -- AutoStatus is unavailable
          off (1), -- AutoStatus is off
          on (2), -- AutoStatus is on
       ... }
```

Unavailable, off, and on indicate three types of autonomous driving status, which respectively are: unavailable status, off status, and on status.

In this embodiment, the autonomous driving status of the vehicle is determined according to the autonomous driving level, and the first message is acquired according to the autonomous driving level and the autonomous driving status, and the autonomous driving status is accurately acquired by using different methods according to different autonomous driving levels, which ensures the reliability of the first message.

On the basis of the above embodiment, the vehicle information interacting method provided by the present application further includes: acquiring a second message broadcast by a roadside apparatus, and the second message carries information indicating the autonomous driving level of at least one vehicle within a preset range and information indicating the autonomous driving status of the vehicle. In this embodiment, the in-vehicle interaction apparatus acquires the second message broadcast by the roadside apparatus, and can obtain the autonomous driving level and the autonomous driving status of at least one vehicle within the preset range of the vehicle.

In an embodiment, the second message may be a roadside safety message (RSM) of the roadside apparatus. The RSM includes a roadside safety message body and multiple corresponding data frames, and each data frame includes multiple data elements.

The preset range is a monitoring range set by the roadside apparatus according to the needs of the actual application. In an embodiment, the preset range may be a communication range of V2X.

In some embodiments, the second message also carries information indicating other vehicle information (for example, vehicle type information, fuel power information, vehicle special event state, vehicle historical trajectory, route prediction, and body light state) of at least one vehicle within a preset range, and the second message may also include pedestrian information, non-motor vehicle information, and the like within a preset range.

This embodiment realizes the sharing of the autonomous driving level and the autonomous driving status of other vehicles around the vehicle, and the sharing of surrounding pedestrian information and non-motor vehicle information, which increases the safety of the transportation environment.

Similarly, on the basis of the foregoing embodiment, the vehicle information interacting method provided by the present application further includes: acquiring a third message broadcast by at least one vehicle within a V2X communication range, and the third message broadcast by each vehicle carries information indicating the autonomous driving level of the vehicle and information indicating the autonomous driving status of the vehicle. This embodiment implements the information interaction between the vehicle and the vehicle, that is, the in-vehicle interaction apparatus of the two vehicles, the information of the surrounding vehicles can be known by acquiring the autonomous driving level and the autonomous driving status of the surrounding vehicles, which improves the safety of driving.

In an embodiment, the third message is a BSM. The BSM includes a basic safety message body and multiple corresponding data frames, and each data frame includes multiple data elements.

FIG. 6 is a schematic flowchart of a fifth embodiment of a vehicle information interacting method according to an embodiment of the present application. The execution body in this embodiment is a roadside apparatus. As shown in FIG. 6, the vehicle information interacting method, specifically includes the following steps:
S301: acquiring a first message broadcast by at least one vehicle.

The first message broadcast by each vehicle carries information indicating an autonomous driving level of the vehicle and information indicating an autonomous driving status of the vehicle.

The roadside apparatus acquires a first message broadcast by a vehicle within a preset range, and the number of vehicles may be one to more. In an embodiment, the preset range is a monitoring range set by the roadside apparatus according to the needs of the actual application, or is a range that allows communication in the communication environment, for example, it may be a communication range of a vehicle to X (V2X).

In a specific implementation, the acquiring the first message broadcast by at least one vehicle includes receiving the first message broadcast by each vehicle within a V2X communication range.

S302: acquiring a second message according to first messages broadcast by each vehicle.

The second message carries information indicating the autonomous driving level of each vehicle and information indicating the autonomous driving status of each vehicle.

The roadside apparatus receives the first message broadcast by the surrounding vehicles, extracts the autonomous driving level and the autonomous driving status of the vehicle from the first message of each vehicle, and determines the second message according to the autonomous driving level and the autonomous driving status of each vehicle.

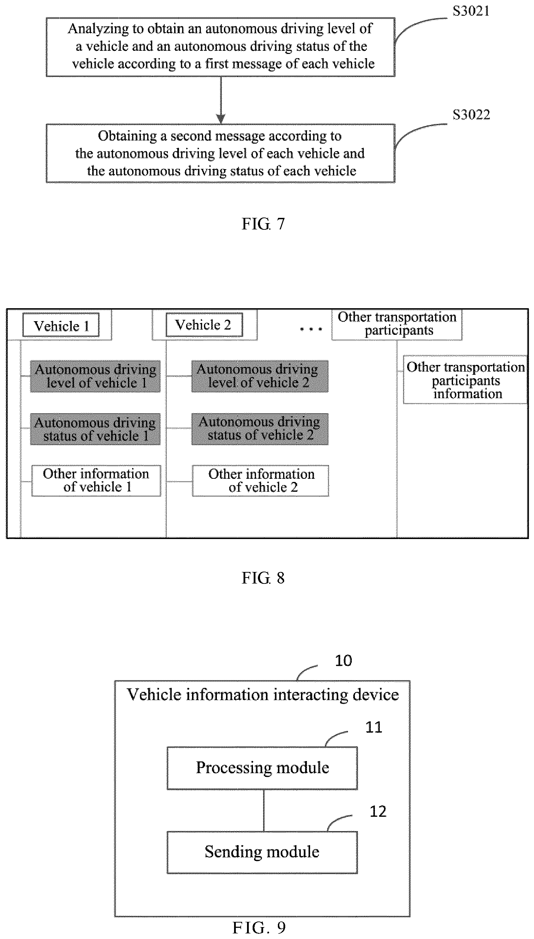

In a specific implementation, FIG. 7 is a schematic flowchart of a sixth embodiment of a vehicle information interacting method according to an embodiment of the present application. As shown in combination with FIG. 7, acquiring the second message according to the first message of each vehicle in step S302, which specifically includes the following steps:
S3021: analyzing to obtain an autonomous driving level of a vehicle and an autonomous driving status of the vehicle according to a first message of each vehicle.
S3022: obtaining a second message according to the autonomous driving level of each vehicle and the autonomous driving status of each vehicle.

In this embodiment, according to the first message of each vehicle, the autonomous driving level of the vehicle and the autonomous driving status of the vehicle are obtained through analysis, and the autonomous driving level of each vehicle and the autonomous driving status of the vehicle are set in the second message, to obtain the second message carrying information indicating the autonomous driving level of each vehicle and information indicating the autonomous driving status of the vehicle.

In an embodiment, the first message is a basic safety message (BSM) of the vehicle. Specifically, the BSM includes a basic safety message body and multiple corresponding data frames, and each data frame includes multiple data elements and/or other data frames, the information indicating the autonomous driving level of the vehicle and the information indicating the autonomous driving status of the vehicle carried by the first message can be respectively set in the basic safety message body or in the data frames included in the BSM.

In an embodiment, the second message is a roadside safety message (RSM) of the roadside apparatus. Specifically, the RSM includes a roadside safety message body and multiple corresponding data frames, each data frame includes multiple data elements and/or other data frames, the information indicating the autonomous driving level of each vehicle and the information indicating the autonomous driving status of each vehicle carried in the second message can be respectively set in the roadside safety message body, or set in the data frame included in the RSM. For example, the information of the autonomous driving status is set in a ParticipantData data frame, the information of the autonomous driving level is set in a VehicleClassification data frame in the ParticipantData data frame, or the information of the autonomous driving level is set in the ParticipantData data frame, the information of the autonomous driving status is set in the VehicleClassification data frame in the ParticipantData frame, or the information of the autonomous driving level and the information of the autonomous driving status are combined into one data frame and set in the roadside safety message body, which is not limited in the present solution.

In a specific implementation, the obtaining the second message according to the autonomous driving level of each vehicle and the autonomous driving status of each vehicle in step S3022, includes: setting an autonomous driving level data element in the RSM according to the autonomous driving level, for example, the roadside apparatus obtains that the autonomous driving level of the vehicle is L0 by acquiring and analyzing the first message of the vehicle, then the autonomous driving level element in the RSM is set to L0; and setting an autonomous driving status data element in the RSM according to the autonomous driving status, for example, the roadside apparatus obtains that the autonomous driving status of the vehicle is an off status by acquiring and analyzing the first message of the vehicle, then the autonomous driving status data element in the RSM is set to "closed" or "off", then the second message is obtain.

It should be understood that both the autonomous driving level data element and the autonomous driving status data element are predefined in the RSM, and specifically, they can both be defined in the roadside safety message body, or both can be defined in any one or two data frames corresponding to the roadside safety message body, or can be respectively defined in the roadside safety message body and any one of the data frames corresponding to the roadside safety message body, or the autonomous driving level data element and the autonomous driving status data element constitute one data frame and is defined in the roadside safety message body. In the future development process, other message bodies or data frames may also be introduced, thus it does not exclude the possibility of introducing the autonomous driving level data element and the autonomous driving status data element in other message bodies or data frames, which is not limited in the present solution.

The present application takes that the autonomous driving level data element is defined in a VehicleClassification data frame and the autonomous driving status data element is defined in a ParticipantData data frame as an example to illustrate.

The ParticipantData data frame is a data frame corresponding to the roadside safety message body. The autonomous driving status data element AutoDrive is defined in the ParticipantData data frame. Through Abstract Syntax Notation One (ASN.1), it can be expressed as:

```
      ParticipantData :: = SEQUENCE {
          ptcType ParticipantType,
          ptcId INTEGER (0..65535),
          -- temporary ID set by RSU
          -- 0 is RSU itself
          -- 1..255 represent participants detected by RSU
          -- ptcId of different participant needs to be unique in RSU
          source SourceType,
          id OCTET STRING (SIZE (8)) OPTIONAL,
          plateNo OCTET STRING (SIZE (4..16)) OPTIONAL,
          secMark DSecond,
          pos PositionOffsetLLV,
          posConfidence PositionConfidenceSet,
          transmission TransmissionState OPTIONAL,
          speed Speed,
          heading Heading,
          angle SteeringWheelAngle OPTIONAL,
          motionCfd MotionConfidenceSet OPTIONAL,
          accelSet AccelerationSet4Way OPTIONAL,
          size VehicleSize,
          vehicleClass VehicleClassification OPTIONAL,
   autoStatus AutoStatus
       ... }
```

DE_AutoStatus is defined as follows:

```
      AutoStatus :: = ENUMERATED {
          unavailable (0), -- AutoStatus is unavailable
          off (1), -- AutoStatus is off
          on (2), -- AutoStatus is on
       ... }
```

Unavailable, off, and on indicate three types of autonomous driving status, which respectively are: unavailable status, off status, and on status.

The above ParticipantData data frame includes a VehicleClassification data frame. The VehicleClassification data frame corresponds to both the basic safety message body and the roadside safety message body. Therefore, the autonomous driving level data element AutoType is defined in the VehicleClassification data frame, which implements the definition in the BSM and also implements the definition in the RSM. The process of defining the autonomous driving level data element AutoType in the VehicleClassification data frame is described in the embodiment of acquiring the first message according to the autonomous driving level and the autonomous driving status in step S1012, and details are not described here again.

S303: broadcasting the second message.

Broadcasting the second message enables one or more in-vehicle interaction apparatus or other roadside apparatus within the communication range to receive the second message, and acquiring the autonomous driving level and the autonomous driving status of all vehicles within the communication range of the roadside apparatus through the second message, which realizes the interaction of vehicle information.

In a specific implementation, the broadcasting the second message, includes: broadcasting the second message through a vehicle to X (V2X) according to a preset period, so that the in-vehicle interaction apparatus or other roadside apparatus within the V2X communication range of the roadside apparatus receive the first message.

The vehicle information interacting method according to an embodiment of the present application, acquiring a first message broadcast by at least one vehicle, the first message broadcast by each vehicle carries information indicating an autonomous driving level of the vehicle and information indicating an autonomous driving status of the vehicle, acquiring a second message according to the first message broadcast by each vehicle, where the second message carries information indicating the autonomous driving level of each vehicle and information indicating the autonomous driving status of each vehicle, and broadcasting the second message, by converting at least one first message sent by the surrounding vehicles or the in-vehicle interaction apparatus into the second message, and broadcasting the second message to at least one vehicle or in-vehicle apparatus or other roadside apparatus within a preset range, the sharing of vehicle information within a preset range is realized, and the safety of the transportation environment and the traffic efficiency are improved.

FIG. 8 is a schematic architectural diagram of an RSM according to an embodiment of the present application. In some embodiments, as shown in combination with FIG. 8, the second message may be an RSM. The RSM includes multiple transportation participants, such as vehicle 1, vehicle 2 and other transportation participants. Other transportation participants include, but are not limited to, pedestrians, non-motor vehicles, and the like. The RSM also includes information corresponding to each transportation participant, such as the autonomous driving level, the autonomous driving status and other information of vehicle 1, other information includes, but is not limited to, information such as vehicle type information, fuel power information, vehicle special event state, vehicle historical trajectory, route prediction, and body light state.

FIG. 9 is a schematic structural diagram of a first embodiment of a vehicle information interacting device according to an embodiment of the present application. As shown in FIG. 9, the interaction device 10 of vehicle information includes:
a processing module 11, configured to determine a first message according to an autonomous driving level of a vehicle, where the first message carries information indicating the autonomous driving level of the vehicle and information indicating an autonomous driving status of the vehicle; and
a sending module 12, configured to broadcast the first message.

The interaction device 10 of vehicle information provided by this embodiment includes a processing module 11 and a sending module 12. A first message is determined according to an autonomous driving level of a vehicle, the first message carries information indicating the autonomous driving level of the vehicle and information indicating the autonomous driving status of the vehicle, and the first message is broadcast to enable other in-vehicle interaction apparatus or roadside apparatus within a communicate range to receive the first message, and the autonomous driving level of the vehicle and the autonomous driving status of the vehicle are acquired by receiving the first message, and the sharing of information between vehicles and the monitoring of the roadside apparatus for the vehicle information is implemented, which improves the safety of transportation environment and the traffic efficiency.

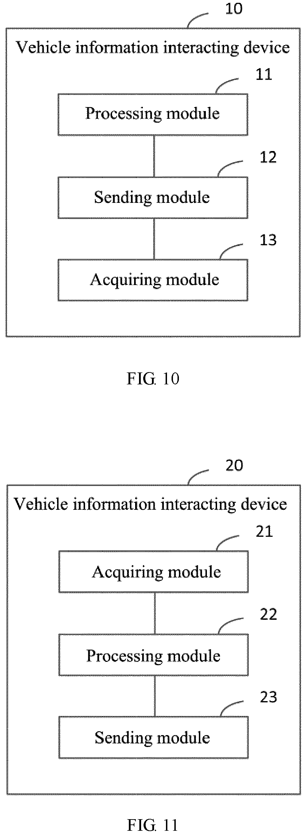

Based on the embodiment shown in FIG. 9, FIG. 10 is a schematic structural diagram of a second embodiment of a vehicle information interacting device according to an embodiment of the present application. As shown in FIG. 10, the interaction device 10 of vehicle information, further includes:
an acquiring module 13, configured to acquire the autonomous driving level of the vehicle if a vehicle to X (V2X) function is detected to be on.

In a specific implementation, the processing module 11 is specifically configured to:
determine the autonomous driving status of the vehicle according to the autonomous driving level, the autonomous driving status includes: an on status, an off status, and an unavailable status; and
acquire the first message according to the autonomous driving level and the autonomous driving status.

In a specific implementation, the first message is a basic safety message (BSM).

In a specific implementation, the sending module 12 is specifically configured to broadcast the first message through a vehicle to X (V2X) according to a preset period.

In a specific implementation, the processing module 11 is specifically configured to:
determine the autonomous driving status of the vehicle to be an off status, if the autonomous driving level of the vehicle is a driverless automation level;
determine the autonomous driving status of the vehicle to be an on status, if the autonomous driving level of the vehicle is a full autonomous driving level; and
detect to obtain the autonomous driving status of the vehicle if the autonomous driving level of the vehicle is a partial driving automation level; where, the partial driving automation level includes a driving assistance level, an advanced driving assistance level, a conditional autonomous driving level, and a regional autonomous driving level; the autonomous driving status includes: an on status, an off status, and an unavailable status.

In a specific implementation, the processing module 11 is specifically configured to:
determine the autonomous driving status of the vehicle to be an on status, if it is detected that the vehicle is in an autonomous driving mode;
determine the autonomous driving status of the vehicle to be an off status, if it is detected that the vehicle is not in an autonomous driving mode; and;
determine the autonomous driving status of the vehicle to be an unavailable status, if it is detected that the vehicle is faulty or there is a detection failure.

In a specific implementation, the processing module 11 is specifically configured to:
set an autonomous driving level data element in an BSM according to the autonomous driving level, and set an autonomous driving status data element in the BSM according to the autonomous driving status, to obtain the first message.

In a specific implementation, the acquiring module 13 is further configured to acquire a second message broadcast by a roadside apparatus, and the second message carries information indicating the autonomous driving level of at least one vehicle within a preset range and information indicating the autonomous driving status of the vehicle.

In a specific implementation, the acquiring module 13 is further configured to:
acquire a third message broadcast by at least one vehicle in the V2X communication range, and the third message broadcast by each vehicle carries information indicating the autonomous driving level of the vehicle and information indicating the autonomous driving status of the vehicle.

The device provided by this embodiment may be configured to implement the technical solution of the embodiments of the foregoing methods. The implementation principles and technical effects are similar, and details are not described herein again in this embodiment.

FIG. 11 is a schematic structural diagram of a third embodiment of a vehicle information interacting device according to an embodiment of the present application. As shown in FIG. 11, the interaction device 20 of vehicle information includes:
an acquiring module 21, configured to acquire a first message broadcast by at least one vehicle, and the first message broadcast by each vehicle carries information indicating an autonomous driving level of a vehicle and information indicating an autonomous driving status of the vehicle;
a processing module 22, configured to acquire a second message according to a first message broadcast by each vehicle, where, the second message carries information indicating the autonomous driving level of each vehicle and information indicating the autonomous driving status of each vehicle; and
a sending module 23, configured to broadcast the second message.

The interaction device 20 of vehicle information provided by this embodiment includes an acquiring module 21, a processing module 22, and a sending module 23. A first message broadcast by at least one vehicle is acquired, and the first message broadcast by each vehicle carries information indicating an autonomous driving level of the vehicle and information indicating an autonomous driving status of a vehicle, and a second message is acquired according to the first message broadcast by each vehicle, where the second message carries information indicating the autonomous driving level of each vehicle and information indicating the autonomous driving status of each vehicle, the second message is broadcast, by converting the received at least one first message sent by the surrounding vehicles or the in-vehicle apparatus into the second message, and broadcasting the second message to at least one vehicle or in-vehicle apparatus or other roadside apparatus within a preset range, the sharing of vehicle information within a preset range is realized, and the safety of transportation environment and the traffic efficiency are improved.

Based on the embodiment shown in FIG. 11, in a specific implementation, the acquiring module 21 is specifically configured to:
receive the first message broadcast by each vehicle within a vehicle to X (V2X) communication range.

In a specific implementation, the processing module 22 is specifically configured to:
analyze to obtain the autonomous driving level of the vehicle and the autonomous driving status of the vehicle according to the first message of each vehicle;
obtain the second message according to the autonomous driving level of each vehicle and the autonomous driving status of each vehicle.

In a specific implementation, the first message is a basic safety message (BSM).

In a specific implementation, the second message is a roadside safety message (RSM).

In a specific implementation, the sending module 23 is specifically configured to:
broadcast the second message through a vehicle to X (V2X) according to a preset period.

In a specific implementation, the processing module 22 is specifically configured to:
set an autonomous driving level data element in an RSM according to the autonomous driving level, and set an autonomous driving status data element in the RSM according to the autonomous driving status, to obtain the second message.

The device provided by this embodiment may be configured to execute the technical solution of the embodiments of the foregoing methods. The implementation principles and technical effects are similar, and details are not described herein again in this embodiment.

According to an embodiment of the present application, the present application further provides an in-vehicle interaction apparatus, a roadside apparatus, and a readable storage medium.

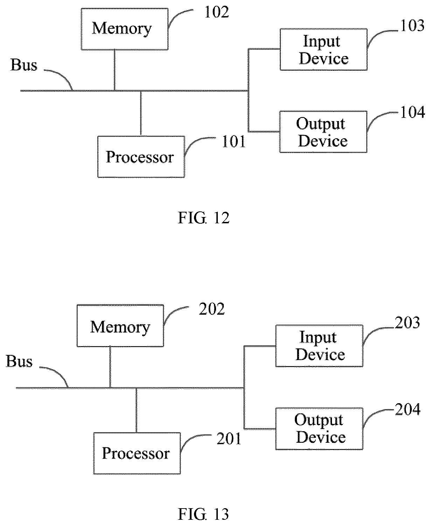

As shown in FIG. 12, it is a block diagram of an in-vehicle interaction apparatus of a vehicle information interacting method according to an embodiment of the present application. The components shown herein, their connections and relationships, and their functions are merely examples, and are not intended to limit the implementation of the present application described and/or required herein.

As shown in FIG. 12, the in-vehicle interaction apparatus includes: one or more processors 101, a memory 102, and interfaces for connecting various components, including high-speed interfaces and low-speed interfaces. The various components are interconnected using different buses and can be mounted on a common motherboard or otherwise installed as required. The processor may process instructions executed within the electronic device, including instructions stored in or on the memory to display graphical information of Graphical User Interface (GUI) on an external input/output device such as a display device coupled to the interfaces. In other implementations, multiple processors and/or multiple buses can be used together with multiple memories, if desired. Similarly, multiple electronic devices can be connected, each device provides part of the necessary operations (for example, as a server array, a group of blade servers, or a multiprocessor system). One processor 101 is taken as an example in FIG. 12.

The memory 102 is a non-transitory computer-readable storage medium provided by the present application. The memory stores instructions executable by at least one processor, so that the at least one processor executes the interaction methods of vehicle information provided by the present application. The non-transitory computer-readable storage medium of the present application stores computer instructions, the computer instructions are used to cause a computer to execute the interaction methods of vehicle information provided by the present application.

As a non-transitory computer-readable storage medium, the memory 102 can be configured to store non-transitory software programs, non-transitory computer executable programs, and modules, such as program instructions/modules corresponding to the interaction methods of vehicle information in the embodiments of the present application (for example, the processing module 11 and the sending module 12 shown in FIG. 9). The processor 101 executes various functional applications and data processing of the server by running non-transitory software programs, instructions, and modules stored in the memory 102, that is, the interaction methods of vehicle information in the foregoing method embodiments.

The memory 102 may include a storage program area and a storage data area, where the storage program area may store an operating system and at least one application program required for functions; the storage data area may store data created according to the use of the in-vehicle interaction apparatus, and the like. In addition, the memory 102 may include a high-speed random access memory, and may also include a non-transitory memory, such as at least one magnetic disk storage device, a flash memory device, or other non-transitory solid-state storage device. In some embodiments, the memory 102 may include a memory remotely disposed with respect to the processor 101, and these remote memories may be connected to the in-vehicle interaction apparatus through a network. Examples of the above network include, but are not limited to, an Internet, an intranet, a local area network, a mobile communication network, and combinations thereof.

The in-vehicle interaction apparatus may further include: an input device 103 and an output device 104. The processor 101, the memory 102, the input device 103, and the output device 104 may be connected through a bus or in other manners. In FIG. 12, connection through a bus is taken as an example.

The input device 103 may receive inputted numeric or character information, and generate key signal inputs related to user settings and function control of an in-vehicle interaction apparatus, input devices such as a touch screen, a keypad, a mouse, a trackpad, a touchpad, a pointer stick, one or more mouse buttons, a trackballs, a joystick. The output device 104 may include a display device, an auxiliary lighting device (for example, a light emitting diode (LED)), and a haptic feedback device (for example, a vibration motor), and the like. The display device may include, but is not limited to, a liquid crystal display (LCD), a light emitting diode (LED) display, and a plasma display. In some implementations, the display device may be a touch screen.

FIG. 13 is a block diagram of a roadside apparatus of a vehicle information interacting method according to an embodiment of the present application. The components shown herein, their connections and relationships, and their functions are merely examples, and are not intended to limit the implementation of the present application described and/or required herein.

As shown in FIG. 13, the roadside apparatus includes: one or more processors 201, a memory 202, and interfaces for connecting various components, including high-speed interfaces and low-speed interfaces. The various components are interconnected using different buses and can be mounted on a common motherboard or otherwise installed as required. The processor may process instructions executed within the electronic device, including instructions stored in or on the memory to display graphical information of the GUI on an external input/output device such as a display device coupled to the interface. In other implementations, multiple processors and/or multiple buses can be used together with multiple memories, if desired. Similarly, multiple electronic devices can be connected, each device provides part of the necessary operations (for example, as a server array, a group of blade servers, or a multiprocessor system). One processor 201 is taken as an example in FIG. 13.

The memory 202 is a non-transitory computer-readable storage medium provided by the present application. The memory stores instructions executable by at least one processor, so that the at least one processor executes the interaction methods of vehicle information provided by the present application. The non-transitory computer-readable storage medium of the present application stores computer instructions, the computer instructions are used to cause a computer to execute the interaction methods of vehicle information provided by the present application.

As a non-transitory computer-readable storage medium, the memory 202 can be configured to store non-transitory software programs, non-transitory computer executable programs, and modules, such as program instructions/modules corresponding to the interaction methods of vehicle information in the embodiments of the present application (for example, the acquiring module 21, the processing module 22 and the sending module 23 shown in FIG. 9). The processor 201 executes various functional applications and data processing of the server by running non-transitory software programs, instructions, and modules stored in the memory 202, that is, the interaction methods of vehicle information in the foregoing method embodiments.

The memory 202 may include a storage program area and a storage data area, where the storage program area may store an operating system and at least one application program required for functions; the storage data area may store data created according to the use of the in-vehicle interaction apparatus, and the like. In addition, the memory 202 may include a high-speed random access memory, and may also include a non-transitory memory, such as at least one magnetic disk storage device, a flash memory device, or other non-transitory solid-state storage device. In some embodiments, the memory 202 may include a memory remotely disposed with respect to the processor 201, and these remote memories may be connected to the in-vehicle interaction apparatus through a network. Examples of the above network include, but are not limited to, an Internet, an intranet, a local area network, a mobile communication network, and combinations thereof.

The roadside apparatus may further include an input device 203 and an output device 204. The processor 201, the memory 202, the input device 203, and the output device 204 may be connected through a bus or in other manners. In FIG. 13, a connection through a bus is taken as an example.

The input device 203 may receive inputted numeric or character information, and generate key signal inputs related to user settings and function control of the roadside apparatus, input devices such as a touch screen, a keypad, a mouse, a trackpad, a touchpad, a pointing stick, one or more mouse buttons, a trackball, a joystick. The output device 204 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some implementations, the display device may be a touch screen.

Various implementations of the systems and technologies described herein may be implemented in a digital electronic circuitry system, an integrated circuit system, an application specific ASIC (application specific integrated circuit), computer hardware, firmware, software, and/or combinations thereof. These various implementations may include: implemented in one or more computer programs, the one or more computer programs are executable and/or interpreted on a programmable system including at least one programmable processor, the programmable processor may be a dedicated or general-purpose programmable processor that may receive data and instructions from a storage system, at least one input device, and at least one output device, and transmit the data and instructions to the storage system, the at least one input device, and the at least one output device.

These computing programs (also known as programs, software, software applications, or codes) include machine instructions of a programmable processor and can be implemented by using high-level procedures and/or object-oriented programming languages, and/or assembly/machine languages. As used herein, the terms "machine-readable medium" and "computer-readable medium" refer to any computer program product, device, and/or apparatus used to provide machine instructions and/or data to a programmable processor (for example, a magnetic disk, an optical disk, a memory, a programmable logic device (PLD)), including, machine-readable medium that receive machine instructions as machine-readable signals. The term "machine-readable signal" refers to any signal used to provide machine instructions and/or data to a programmable processor.

To provide interaction with the user, the systems and technologies described herein can be implemented on a computer that has a display device (for example, a CRT (cathode ray tube) or a LCD (liquid crystal display) monitor) for displaying information to the user; and a keyboard and pointing device (such as a mouse or a trackball) through which the user can provide input to the computer. Other kinds of apparatus may also be used to provide interaction with the user; for example, the feedback provided to the user may be any form of sensor feedback (for example, visual feedback, auditory feedback, or haptic feedback); and may be in any form (including acoustic input, voice input, or tactile input) to receive input from the user.

The systems and technologies described herein can be implemented in a computing system that includes back-end components (for example, as a data server), or a computing system that includes middleware components (for example, an application server), or a computing system that includes front-end components (for example, a user computer with a graphical user interface or a web browser through which the user can interact with the implementation of the systems and technologies described herein), or a computing system that includes any combination of such back-end components, middleware components, or front-end components. The components of the systems may be interconnected by any form or medium of digital data communication (for example, a communication network). Examples of communication networks include: local area network (LAN), wide area network (WAN), and Internet.

The computer system may include a client side and a server. The client side and the server are generally remote from each other and typically interact through a communication network. A relationship of the client side and the server is generated by computer programs running on a corresponding computer and having a client side-server relationship with each other.

It should be understood that various forms of processes shown above can be used to reorder, add, or delete steps. For example, various steps recorded in the present application can be executed in parallel, sequentially, or in different orders. As long as the desired results of the technical solutions disclosed in the present disclosure can be achieved, there is no limitation herein.

## Claims

1. A vehicle information interacting method for vehicle-to-anything, V2X, communication, comprising:
acquiring (103) an autonomous driving level of a vehicle if a V2X function is detected to be on,
wherein the autonomous driving level comprises a driverless automation level, a full autonomous driving level, a partial driving automation level, and
wherein the partial driving automation level comprises a driving assistance level, an advanced driving assistance level, a conditional autonomous driving level, and a regional autonomous driving level;
determining (1011) an autonomous driving status of the vehicle according to the acquired autonomous driving level,
wherein the autonomous driving status comprises: an on status, an off status, and an unavailable status; and
wherein the determining (1011) the autonomous driving status of the vehicle according to the autonomous driving level comprises:
determining (201) the autonomous driving status of the vehicle to be the off status if the autonomous driving level of the vehicle is the driverless automation level;
determining (202) the autonomous driving status of the vehicle to be the on status if the autonomous driving level of the vehicle is the full autonomous driving level; and
detecting (203) to obtain the autonomous driving status of the vehicle if the autonomous driving level of the vehicle is the partial driving automation level;
wherein the detecting to obtain the autonomous driving status of the vehicle comprises:
determining the autonomous driving status of the vehicle to be the on status if it is detected that the vehicle is in an autonomous driving mode;
determining the autonomous driving status of the vehicle to be the off status if it is detected that the vehicle is not in an autonomous driving mode; and
determining the autonomous driving status of the vehicle to be the unavailable status if it is detected that the vehicle is faulty or there is a detection failure;
determining (101) a first message according to the autonomous driving level and the autonomous driving status, wherein the first message carries information indicating the autonomous driving level and information indicating the autonomous driving status,
wherein the first message is a basic safety message, BSM; and
broadcasting (102) the first message to share the information indicating the autonomous driving level and the information indicating the autonomous driving status with at least one of a roadside apparatus and other vehicles.

2. The method according to claim 1, wherein broadcasting (102) the first message, comprises: broadcasting the first message through a V2X technology according to a preset period.

3. An in-vehicle information interacting device (10) for vehicle-to-anything, V2X, communication, the device (10) being applied to a vehicle and comprising:
an acquiring module (13), configured to acquire an autonomous driving level of the vehicle if a V2X function is detected to be on,
wherein the autonomous driving level comprises a driverless automation level, a full autonomous driving level, a partial driving automation level, and
wherein the partial driving automation level comprises a driving assistance level, an advanced driving assistance level, a conditional autonomous driving level, and a regional autonomous driving level;
a processing module (11), configured to:
determine an autonomous driving status of the vehicle according to the acquired autonomous driving level,
wherein the autonomous driving status comprises: an on status, an off status, and an unavailable status; and
wherein the processing module (11) is further configured to:
determine the autonomous driving status of the vehicle to be the on status if the autonomous driving level of the vehicle is the full autonomous driving level;
determine the autonomous driving status of the vehicle to be the off status if the autonomous driving level of the vehicle is the driverless automation level; and
detect to obtain the autonomous driving status of the vehicle if the autonomous driving level of the vehicle is the partial driving automation level;
wherein the processing module (11) is further configured to:
determine the autonomous driving status of the vehicle to be the on status if it is detected that the vehicle is in an autonomous driving mode;
determine the autonomous driving status of the vehicle to be the off status if it is detected that the vehicle is not in an autonomous driving mode; and
determine the autonomous driving status of the vehicle to be the unavailable status if it is detected that the vehicle is faulty or there is a detection failure; and
determine a first message according to the autonomous driving level of the vehicle, wherein the first message carries information indicating the autonomous driving level and information indicating the autonomous driving status, wherein the first message is a basic safety message, BSM; and
a sending module (12), configured to broadcast the first message to share the information indicating the autonomous driving level and the information indicating the autonomous driving status with at least one of a roadside apparatus and other vehicles.

4. The in-vehicle information interacting device (10) according to claim 3, wherein the sending module (12) is configured to: broadcast the first message through a V2X technology according to a preset period.

5. The in-vehicle information interacting device (10) according to claim 3, wherein the processing module (11) is configured to:
set an autonomous driving level data element in a
BSM according to the autonomous driving level, and set an autonomous driving status data element in the BSM according to the autonomous driving status, to obtain the first message.

6. The in-vehicle information interacting device (10) according to claim 3, wherein the acquiring module (13) is further configured to:
acquire a second message broadcast by a roadside apparatus, and the second message carries information indicating autonomous driving levels of at least one vehicle within a preset range and information indicating autonomous driving statuses of the at least one vehicle; or
acquire a third message broadcast by at least one vehicle within a V2X communication range, and the third message broadcast by each vehicle carries information indicating autonomous driving levels of the at least one vehicle and information indicating autonomous driving statuses of the at least one vehicle.

7. A roadside apparatus for vehicle-to-anything, V2X, communication, the roadside apparatus comprising:
an acquiring module (21), configured to acquire a first message broadcast by at least one in-vehicle information interacting device applied to a vehicle, and the first message carries information indicating an autonomous driving level of the at least one vehicle and information indicating an autonomous driving status of the at least one vehicle;
wherein the autonomous driving level comprises a driverless automation level, a full autonomous driving level, a partial driving automation level, and wherein the partial driving automation level comprises a driving assistance level, an advanced driving assistance level, a conditional autonomous driving level, and a regional autonomous driving level; and
wherein the autonomous driving status comprises an on status, an off status, and an unavailable status;
a processing module (22), configured to acquire a second message according to all first messages broadcast by all of the at least one vehicle, wherein the second message carries information indicating autonomous driving levels of all of the at least one vehicle and information indicating the autonomous driving statuses of all of the at least one vehicle; and
a sending module (23), configured to broadcast the second message to indicate the information indicating the autonomous driving levels and the information indicating the autonomous driving statuses to at least one of another roadside apparatus and other vehicles,
wherein the first message is a basic safety message, BSM, and the second message is a roadside safety message, RSM.

8. The roadside apparatus according to claim 7, wherein the acquiring module (21) is configured to:
receive the first message broadcast by each vehicle within a V2X communication range;
wherein the processing module (22) is configured to:
analyze to obtain the autonomous driving level of the vehicle and the autonomous driving status of the vehicle according to the first message of each vehicle; and
obtain the second message according to the autonomous driving level of each vehicle and the autonomous driving status of each vehicle.

9. The roadside apparatus according to claim 7 or 8, wherein the sending module (23) is configured to:
broadcast the second message through a V2X technology according to a preset period.

10. The roadside apparatus according to claim 8, wherein the processing module is configured to:
set an autonomous driving level data element in an RSM according to the autonomous driving levels, and set an autonomous driving status data element in the RSM according to the autonomous driving statuses, to obtain the second message.

11. A non-transitory computer-readable storage medium storing computer instructions, wherein the computer instructions are used to cause a computer to execute the method of claim 1 or 2.

## Patentansprüche

1. Fahrzeug-Informationsinteraktionsverfahren für die Fahrzeug-zu-alles-Kommunikation (Vehicle-to-Anything, V2X), das Folgendes umfasst:
Erfassen (103) eines autonomen Fahrniveaus eines Fahrzeugs, wenn erfasst wird, dass eine V2X-Funktion eingeschaltet ist,
wobei das autonome Fahrniveau ein fahrerloses Automatisierungsniveau, ein vollständig autonomes Fahrniveau und ein teilweises Fahrautomatisierungsniveau umfasst, und
wobei das teilweise Fahrautomatisierungsniveau ein Fahrassistenzniveau, ein fortgeschrittenes Fahrassistenzniveau, ein bedingtes autonomes Fahrniveau und ein regionales autonomes Fahrniveau umfasst;
Bestimmen (1011) eines autonomen Fahrzustands des Fahrzeugs gemäß dem erworbenen autonomen Fahrniveau,
wobei der autonome Fahrzustand Folgendes umfasst: einen Ein-Zustand, einen Aus-Zustand und einen Nichtverfügbarkeitszustand; und
wobei das Bestimmen (1011) des autonomen Fahrzustands des Fahrzeugs gemäß dem autonomen Fahrniveau Folgendes umfasst:
Bestimmen (201) des autonomen Fahrzustands des Fahrzeugs als den Aus-Zustand, wenn das autonome Fahrniveau des Fahrzeugs das fahrerlose Automatisierungsniveau ist;
Bestimmen (202) des autonomen Fahrzustands des Fahrzeugs als den Ein-Zustand, wenn das autonome Fahrniveau des Fahrzeugs das vollständig autonome Fahrniveau ist; und
Erfassen (203), um den autonomen Fahrzustand des Fahrzeugs zu erhalten, wenn das autonome Fahrniveau des Fahrzeugs das teilweise Fahrautomatisierungsniveau ist;
wobei das Erfassen, um den autonomen Fahrzustand des Fahrzeugs zu erhalten, Folgendes umfasst:
Bestimmen des autonomen Fahrzustands des Fahrzeugs als den Ein-Zustand, wenn erfasst wird, dass sich das Fahrzeug in einem autonomen Fahrmodus befindet;
Bestimmen des autonomen Fahrzustands des Fahrzeugs als den Aus-Zustand, wenn erfasst wird, dass sich das Fahrzeug nicht in einem autonomen Fahrmodus befindet; und
Bestimmen des autonomen Fahrzustands des Fahrzeugs als den Nichtverfügbarkeitszustand, wenn festgestellt wird, dass das Fahrzeug defekt ist oder ein Erfassungsfehler vorliegt;
Bestimmen (101) einer ersten Nachricht gemäß dem autonomen Fahrniveau und dem autonomen Fahrzustand, wobei die erste Nachricht Informationen trägt, die das autonome Fahrniveau und Informationen, die den autonomen Fahrzustand anzeigen, enthalten,
wobei die erste Nachricht eine grundlegende Sicherheitsnachricht (Basic Safety Message, BSM) ist; und
Senden (102) der ersten Nachricht, um die Informationen, die das autonome Fahrniveau anzeigen, und die Informationen, die den autonomen Fahrzustand anzeigen, mit mindestens einem von einer straßenseitigen Vorrichtung und anderen Fahrzeugen zu teilen.

2. Verfahren nach Anspruch 1, wobei das Senden (102) der ersten Nachricht Folgendes umfasst:
Senden der ersten Nachricht über eine V2X-Technologie gemäß einer voreingestellten Zeitspanne.

3. Fahrzeuginterne Informationsinteraktionsvorrichtung (10) für die Fahrzeug-zu-alles-Kommunikation, V2X, wobei die Vorrichtung (10) an einem Fahrzeug angebracht ist und Folgendes umfasst:
ein Erfassungsmodul (13), das dafür konfiguriert ist, ein autonomes Fahrniveau des Fahrzeugs zu erfassen, wenn festgestellt wird, dass eine V2X-Funktion eingeschaltet ist,
wobei das autonome Fahrniveau ein fahrerloses Automatisierungsniveau, ein vollständig autonomes Fahrniveau und ein teilweises Fahrautomatisierungsniveau umfasst, und
wobei das teilweise Fahrautomatisierungsniveau ein Fahrassistenzniveau, ein fortgeschrittenes Fahrassistenzniveau, ein bedingtes autonomes Fahrniveau und ein regionales autonomes Fahrniveau umfasst;
ein Verarbeitungsmodul (11), das für Folgendes konfiguriert ist:
Bestimmen eines autonomen Fahrzustands des Fahrzeugs gemäß dem erworbenen autonomen Fahrniveau,
wobei der autonome Fahrzustand Folgendes umfasst: einen Ein-Zustand, einen Aus-Zustand und einen Nichtverfügbarkeitszustand; und
wobei das Verarbeitungsmodul (11) ferner für Folgendes konfiguriert ist:
Bestimmen des autonomen Fahrzustands des Fahrzeugs als den Ein-Zustand, wenn das autonome Fahrniveau des Fahrzeugs das vollständig autonome Fahrniveau ist;
Bestimmen des autonomen Fahrzustands des Fahrzeugs als den Aus-Zustand, wenn das autonome Fahrniveau des Fahrzeugs das fahrerlose Automatisierungsniveau ist; und
Erfassen, um den autonomen Fahrzustand des Fahrzeugs zu erhalten, wenn das autonome Fahrniveau des Fahrzeugs das teilweise Fahrautomatisierungsniveau ist;
wobei das Verarbeitungsmodul (11) ferner für Folgendes konfiguriert ist:
Bestimmen des autonomen Fahrzustands des Fahrzeugs als den Ein-Zustand, wenn erfasst wird, dass sich das Fahrzeug in einem autonomen Fahrmodus befindet;
Bestimmen des autonomen Fahrzustands des Fahrzeugs als den Aus-Zustand, wenn erfasst wird, dass sich das Fahrzeug nicht in einem autonomen Fahrmodus befindet; und
Bestimmen des autonomen Fahrzustands des Fahrzeugs als den Nichtverfügbarkeitszustand, wenn festgestellt wird, dass das Fahrzeug defekt ist oder ein Erfassungsfehler vorliegt; und
Bestimmen einer ersten Nachricht in Abhängigkeit von dem autonomen Fahrniveau des Fahrzeugs, wobei die erste Nachricht Informationen trägt, die das autonome Fahrniveau und Informationen, die den autonomen Fahrzustand anzeigen, enthalten, wobei die erste Nachricht eine grundlegende Sicherheitsnachricht, BSM, ist; und
ein Sendemodul (12), das dafür konfiguriert ist, die erste Nachricht zu senden, um die Informationen, die das autonome Fahrniveau anzeigen, und die Informationen, die den autonomen Fahrzustand anzeigen, mit mindestens einem von einer straßenseitigen Vorrichtung und anderen Fahrzeugen zu teilen.

4. Fahrzeuginterne Informationsinteraktionsvorrichtung (10) nach Anspruch 3, wobei das Sendemodul (12) dafür konfiguriert ist, die erste Nachricht über eine V2X-Technologie gemäß einer voreingestellten Periode zu senden.

5. Fahrzeuginterne Informationsinteraktionsvorrichtung (10) nach Anspruch 3, wobei das Verarbeitungsmodul (11) für Folgendes konfiguriert ist:
Setzen eines Datenelements für das autonome Fahrniveau in einer BSM entsprechend dem autonomen Fahrniveau, und Setzen eines Datenelements für den autonomen Fahrzustand in der BSM entsprechend dem autonomen Fahrzustand, um die erste Nachricht zu erhalten.

6. Fahrzeuginterne Informationsinteraktionsvorrichtung (10) nach Anspruch 3, wobei das Erfassungsmodul (13) ferner für Folgendes konfiguriert ist:
Erfassen einer zweiten Nachricht, die von einer straßenseitigen Vorrichtung gesendet wird, und wobei die zweite Nachricht Folgendes trägt: Informationen, die autonome Fahrniveaus von mindestens einem Fahrzeug innerhalb eines voreingestellten Bereichs anzeigen, und Informationen, die autonome Fahrzustände des mindestens einen Fahrzeugs anzeigen; oder
Erfassen einer dritten Nachricht, die von mindestens einem Fahrzeug innerhalb eines V2X-Kommunikationsbereichs gesendet wird, und wobei die dritte Nachricht, die von jedem Fahrzeug gesendet wird, Folgendes trägt: Informationen, die autonome Fahrniveaus des mindestens einen Fahrzeugs anzeigen, und Informationen, die autonome Fahrzustände des mindestens einen Fahrzeugs anzeigen.

7. Straßenseitige Vorrichtung für die Fahrzeug-zu-alles, V2X, Kommunikation, wobei die straßenseitige Vorrichtung Folgendes umfasst:
ein Erfassungsmodul (21), das dafür konfiguriert ist, eine erste Nachricht zu erfassen, die von mindestens einer fahrzeuginternen Informationsinteraktionsvorrichtung gesendet wird, die an einem Fahrzeug angebracht ist, und wobei die erste Nachricht Folgendes trägt: Informationen, die ein autonomes Fahrniveau des mindestens einen Fahrzeugs angeben, und Informationen, die einen autonomen Fahrzustand des mindestens einen Fahrzeugs angeben;
wobei das autonome Fahrniveau ein fahrerloses Automatisierungsniveau, ein vollständig autonomes Niveau und ein teilweises Fahrautomatisierungsniveau umfasst, und wobei das teilweise Fahrautomatisierungsniveau ein Fahrassistenzniveau, ein fortgeschrittenes Fahrassistenzniveau, ein bedingtes autonomes Fahrniveau und ein regionales autonomes Fahrniveau umfasst; und
wobei der autonome Fahrzustand Folgendes umfasst: einen Ein-Zustand, einen Aus-Zustand und einen Nichtverfügbarkeitszustand;
ein Verarbeitungsmodul (22), das dafür konfiguriert ist, eine zweite Nachricht in Übereinstimmung mit allen ersten Nachrichten, die von allen des mindestens einen Fahrzeugs gesendet werden, zu erfassen, wobei die zweite Nachricht Folgendes trägt:
Informationen, die autonome Fahrniveaus aller des mindestens einen Fahrzeugs anzeigen, und Informationen, die die autonomen Fahrzustände aller des mindestens einen Fahrzeugs anzeigen; und
ein Sendemodul (23), das dafür konfiguriert ist, die zweite Nachricht zu senden, um die Informationen, die die autonomen Fahrniveaus anzeigen, und die Informationen, die die autonomen Fahrzustände anzeigen, an mindestens eine andere straßenseitige Vorrichtung und andere Fahrzeuge zu übermitteln,
wobei die erste Nachricht eine grundlegende Sicherheitsnachricht, BSM, und die zweite Nachricht eine straßenseitige Sicherheitsnachricht (Roadside Safety Message, RSM) ist.

8. Straßenseitige Vorrichtung nach Anspruch 7, wobei das Erfassungsmodul (21) für Folgendes konfiguriert ist:
Empfangen der ersten Nachricht, die von jedem Fahrzeug innerhalb eines V2X-Kommunikationsbereichs gesendet wird;
wobei das Verarbeitungsmodul (22) für Folgendes konfiguriert ist:
Analysieren, um das autonome Fahrniveau des Fahrzeugs und den autonomen Fahrzustand des Fahrzeugs gemäß der ersten Nachricht jedes Fahrzeugs zu erhalten; und
Erhalten der zweiten Nachricht entsprechend dem autonomen Fahrniveau jedes Fahrzeugs und dem autonomen Fahrzustand jedes Fahrzeugs.

9. Straßenseitige Vorrichtung nach Anspruch 7 oder 8, wobei das Sendemodul (23) für Folgendes konfiguriert ist:
Senden der zweiten Nachricht über eine V2X-Technologie gemäß einer voreingestellten Zeitspanne.

10. Straßenseitige Vorrichtung nach Anspruch 8, wobei das Verarbeitungsmodul für Folgendes konfiguriert ist:
Setzen eines Datenelements für das autonome Fahrniveau in einer RSM entsprechend den autonomen Fahrniveaus, und Setzen eines Datenelements für den autonomen Fahrzustand in der RSM entsprechend den autonomen Fahrzuständen, um die zweite Nachricht zu erhalten.

11. Nicht-flüchtiges computerlesbares Speichermedium, das Computerbefehle speichert, wobei die Computerbefehle verwendet werden, um einen Computer zu veranlassen, das Verfahren nach Anspruch 1 oder 2 auszuführen.

## Revendications

1. Procédé d'interaction d'informations de véhicule pour une communication V2X véhicule-à-tout, comprenant :
l'acquisition (103) d'un niveau de conduite autonome d'un véhicule si une fonction V2X est détectée comme étant activée,
dans lequel le niveau de conduite autonome comprend un niveau d'automatisation sans conducteur, un niveau de conduite entièrement autonome, un niveau d'automatisation de conduite partielle, et
dans lequel le niveau d'automatisation de conduite partielle comprend un niveau d'assistance à la conduite, un niveau d'assistance à la conduite avancée, un niveau de conduite autonome conditionnelle et un niveau de conduite autonome régionale ;
la détermination (1011) d'un état de conduite autonome du véhicule selon le niveau de conduite autonome acquis,
dans lequel l'état de conduite autonome comprend : un état activé, un état désactivé et un état indisponible ; et
dans lequel la détermination (1011) de l'état de conduite autonome du véhicule selon le niveau de conduite autonome comprend :
la détermination (201) de l'état de conduite autonome du véhicule comme étant l'état désactivé si le niveau de conduite autonome du véhicule est le niveau d'automatisation sans conducteur ;
la détermination (202) de l'état de conduite autonome du véhicule comme étant l'état activé si le niveau de conduite autonome du véhicule est le niveau de conduite entièrement autonome ; et
la détection (203) pour obtenir l'état de conduite autonome du véhicule si le niveau de conduite autonome du véhicule est le niveau d'automatisation de conduite partielle ;
dans lequel la détection pour obtenir l'état de conduite autonome du véhicule comprend :
la détermination de l'état de conduite autonome du véhicule comme étant l'état activé s'il est détecté que le véhicule est dans un mode de conduite autonome ;
la détermination de l'état de conduite autonome du véhicule comme étant l'état désactivé s'il est détecté que le véhicule n'est pas dans un mode de conduite autonome ; et
la détermination de l'état de conduite autonome du véhicule comme étant l'état indisponible s'il est détecté que le véhicule est défectueux ou qu'il y a un échec de détection ;
la détermination (101) d'un premier message selon le niveau de conduite autonome et l'état de conduite autonome, dans lequel le premier message transporte des informations indiquant le niveau de conduite autonome et des informations indiquant l'état de conduite autonome,
dans lequel le premier message est un message de sécurité de base, BSM ; et
la diffusion (102) du premier message pour partager les informations indiquant le niveau de conduite autonome et les informations indiquant l'état de conduite autonome avec au moins l'un d'un appareil routier et d'autres véhicules.

2. Procédé selon la revendication 1, dans lequel la diffusion (102) du premier message comprend :
la diffusion du premier message à travers une technologie V2X selon une période prédéfinie.

3. Dispositif d'interaction d'informations embarqué (10) pour une communication véhicule-à-tout, V2X, le dispositif (10) étant appliqué à un véhicule et comprenant :
un module d'acquisition (13), configuré pour acquérir un niveau de conduite autonome du véhicule si une fonction V2X est détectée comme étant activée,
dans lequel le niveau de conduite autonome comprend un niveau d'automatisation sans conducteur, un niveau de conduite entièrement autonome, un niveau d'automatisation de conduite partielle, et
dans lequel le niveau d'automatisation de conduite partielle comprend un niveau d'assistance à la conduite, un niveau d'assistance à la conduite avancée, un niveau de conduite autonome conditionnelle et un niveau de conduite autonome régionale ;
un module de traitement (11), configuré pour :
déterminer un état de conduite autonome du véhicule selon le niveau de conduite autonome acquis,
dans lequel l'état de conduite autonome comprend : un état activé, un état désactivé et un état indisponible ; et
dans lequel le module de traitement (11) est en outre configuré pour :
déterminer l'état de conduite autonome du véhicule comme étant l'état activé si le niveau de conduite autonome du véhicule est le niveau de conduite entièrement autonome ;
déterminer l'état de conduite autonome du véhicule comme étant l'état désactivé si le niveau de conduite autonome du véhicule est le niveau d'automatisation sans conducteur ; et
détecter pour obtenir l'état de conduite autonome du véhicule si le niveau de conduite autonome du véhicule est le niveau d'automatisation de conduite partielle ;
dans lequel le module de traitement (11) est en outre configuré pour :
déterminer l'état de conduite autonome du véhicule comme étant l'état activé s'il est détecté que le véhicule est dans un mode de conduite autonome ;
déterminer l'état de conduite autonome du véhicule comme étant l'état désactivé s'il est détecté que le véhicule n'est pas dans un mode de conduite autonome ; et
déterminer l'état de conduite autonome du véhicule comme étant l'état indisponible s'il est détecté que le véhicule est défectueux ou qu'il y a un échec de détection ; et
déterminer un premier message selon le niveau de conduite autonome du véhicule, dans lequel le premier message transporte des informations indiquant le niveau de conduite autonome et des informations indiquant l'état de conduite autonome, dans lequel le premier message est un message de sécurité de base, BSM ; et
un module d'envoi (12), configuré pour diffuser le premier message afin de partager les informations indiquant le niveau de conduite autonome et les informations indiquant l'état de conduite autonome avec au moins l'un d'un appareil routier et d'autres véhicules.

4. Dispositif d'interaction d'informations embarqué (10) selon la revendication 3, dans lequel le module d'envoi (12) est configuré pour : diffuser le premier message à travers une technologie V2X selon une période prédéfinie.

5. Dispositif d'interaction d'informations embarqué (10) selon la revendication 3, dans lequel le module de traitement (11) est configuré pour :
définir un élément de données de niveau de conduite autonome dans un BSM selon le niveau de conduite autonome, et définir un élément de données d'état de conduite autonome dans le BSM selon l'état de conduite autonome, pour obtenir le premier message.

6. Dispositif d'interaction d'informations embarqué (10) selon la revendication 3, dans lequel le module d'acquisition (13) est en outre configuré pour :
acquérir un deuxième message diffusé par un appareil routier, et le deuxième message transporte des informations indiquant les niveaux de conduite autonome d'au moins un véhicule dans une plage prédéfinie et des informations indiquant des états de conduite autonome de l'au moins un véhicule ; ou
acquérir un troisième message diffusé par au moins un véhicule dans une plage de communication V2X, et le troisième message diffusé par chaque véhicule transporte des informations indiquant des niveaux de conduite autonome de l'au moins un véhicule et des informations indiquant les états de conduite autonome de l'au moins un véhicule.

7. Appareil routier pour une communication véhicule-à-tout, V2X, l'appareil routier comprenant :
un module d'acquisition (21), configuré pour acquérir un premier message diffusé par au moins un dispositif d'interaction d'informations embarqué appliqué à un véhicule, et le premier message transporte des informations indiquant un niveau de conduite autonome de l'au moins un véhicule et des informations indiquant un état de conduite autonome de l'au moins un véhicule ;
dans lequel le niveau de conduite autonome comprend un niveau d'automatisation sans conducteur, un niveau de conduite entièrement autonome, un niveau d'automatisation de conduite partielle, et dans lequel le niveau d'automatisation de conduite partielle comprend un niveau d'assistance à la conduite, un niveau d'assistance à la conduite avancée, un niveau de conduite autonome conditionnelle, et un niveau de conduite autonome régionale ; et
dans lequel l'état de conduite autonome comprend un état activé, un état désactivé et un état indisponible ;
un module de traitement (22), configuré pour acquérir un deuxième message en fonction de l'ensemble des premiers messages diffusés par l'ensemble de l'au moins un véhicule, dans lequel le deuxième message porte des informations indiquant les niveaux de conduite autonome de l'ensemble de l'au moins un véhicule et des informations indiquant les statuts de conduite autonome de l'ensemble de l'au moins un véhicule ; et
un module d'envoi (23), configuré pour diffuser le deuxième message pour indiquer les informations indiquant les niveaux de conduite autonome et les informations indiquant les statuts de conduite autonome à au moins l'un d'un autre appareil routier et d'autres véhicules,
dans lequel le premier message est un message de sécurité de base, BSM, et le deuxième message est un message de sécurité routière, RSM.

8. Appareil routier selon la revendication 7, dans lequel le module d'acquisition (21) est configuré pour :
recevoir le premier message diffusé par chaque véhicule dans une plage de communication V2X ;
dans lequel le module de traitement (22) est configuré pour :
analyser pour obtenir le niveau de conduite autonome du véhicule et l'état de conduite autonome du véhicule selon le premier message de chaque véhicule ; et
obtenir le deuxième message en fonction du niveau de conduite autonome de chaque véhicule et de l'état de conduite autonome de chaque véhicule.

9. Appareil routier selon la revendication 7 ou 8, dans lequel le module d'envoi (23) est configuré pour :
diffuser le deuxième message à travers une technologie V2X selon une période prédéfinie.

10. Appareil routier selon la revendication 8, dans lequel le module de traitement est configuré pour :
définir un élément de données de niveau de conduite autonome dans un RSM selon les niveaux de conduite autonome, et définir un élément de données d'état de conduite autonome dans le RSM selon les états de conduite autonome, pour obtenir le deuxième message.

11. Support de stockage lisible par ordinateur non transitoire stockant des instructions informatiques, dans lequel les instructions informatiques sont utilisées pour amener un ordinateur à exécuter le procédé de la revendication 1 ou 2.
